# EUROPÄISCHE PATENTANMELDUNG

(11) **EP 0 709 274 A1**
(43) Veröffentlichungstag der Anmeldung: **01.05.1996**
(21) Anmeldenummer: 95810640.3
(22) Anmeldetag: 12.10.1995
(51) Int. Cl.: B62D 1/19

(54) **Sicherheitslenksäule**

(30) Priorität: 26.10.1994 CH 3204/94
(71) Anmelder: Alusuisse-Lonza Services AG, CH-8212 Neuhausen am Rheinfall (CH)
(72) Erfinder: Herz, Erich, D-78224 Singen (DE); Roczyn, Hans-Gerd, D-78224 Singen (DE); Meyle, Lothar, D-74302 Bietigheim-Bissingen (DE)

(57) **Zusammenfassung**

Sicherheitslenksäule und Verfahren zur Herstellung von Sicherheitslenksäulen für Fahrzeuge, insbesondere Kraftfahrzeuge, mit einer bei frontaler Krafteinwirkung bleibend verformbaren Lenkspindel (1), wobei die Lenkspindel (1) in ihrer Länge wenigstens einen Bereich mit Sollknickstellen (2) aufweist. Zumindest der Bereich mit Sollknickstellen (2) oder Teile des Bereiches mit Sollknickstellen (2) der Lenkspindel (1) ist aus Aluminium gefertigt und der Bereich mit Sollknickstellen (2) oder Teile des Bereiches mit Sollknickstellen (2) aus Aluminium der Lenkspindel (1) werden während einem Zeitintervall von 1 Sekunde bis 300 Sekunden erhöhten Temperaturen von 250°C bis 450°C ausgesetzt.

## Beschreibung

Vorliegende Erfindung betrifft eine Sicherheitslenkssäule für Fahrzeuge, insbesondere Kraftfahrzeuge, mit einer bei frontaler Krafteinwirkung bleibend verformbaren Lenkspindel, wobei die Lenkspindel in ihrer Länge wenigstens einen Bereich mit Sollknickstellen aufweist. Vorliegende Erfindung betrifft auch ein Verfahren zur Herstellung einer Sicherheitslenksäule für Fahrzeuge, insbesondere Kraftfahrzeuge, mit einer bei frontaler Krafteinwirkung bleibend verformbarem Lenkspindel, wobei die Lenkspindel in ihrer Länge wenigstens einen Bereich mit Sollknickstellen aufweist. Vorliegende Erfindung betrifft auch die nach vorliegendem Verfahren hergestellten Lenkspindeln der Sicherheitslenksäulen.

Aus der DE-OS 2160849 und der DE-OS 2212713 sind Sicherheitslenksäulen für Kraftfahrzeuge bekannt. Es wird in diesen Literaturstellen jeweils eine Lenksäule beschrieben, welche einen unter Energieabsorption bleibend verformbaren Rohrteil aufweisen. Der bleibend verformbare Rohrteil soll beispielsweise mit einer oder mehreren Abflachungen bzw. Eindrücken versehen sein oder soll mehrere Sollknickstellen aufweisen. Derartige Sollknickstellen reduzieren die Ausknickkraft und Stauchkraft, insbesondere im Falle einer unfallmässigen Beanspruchung. Trotz dieser entsprechend ausgebildeten Zonen muss die Lenksäule die auftretenden Torsionskräfte aufnehmen können ohne sich zu verformen. Ein wesentlicher Anspruch an den Teil der Sicherheitslenksäule mit den Sollknickstellen besteht darin, dass bei einer Verformung keine Teile brechen und dass keine scharfen Kanten z.B. durch Risse entstehen, an welcher dann beispielsweise Leitungen aufgeschnitten oder durchgetrennt werden können. Diese Forderungen können beispielsweise durch die Verwendung von Stahl mit hohem Dehnungsvermögen erfüllt werden.

Nachteil der Anwendung von Stahl ist dessen hohes spezifisches Gewicht. Eine Gewichtsoptimierung in diesem Bereich kann nur durch die Verwendung von spezifisch leichteren Werkstoffen, wie z.B. Aluminium erfüllt werden. Um die Ansprüche an Torsionsfestigkeit zu erfüllen, müssen Aluminiumwerkstoffe hoher Festigkeiten angewendet werden. Die hohen Festigkeiten werden nicht zuletzt auch für Zapfen, Gabeln, Flansche, längsgezahnte Hülsen oder längsgezahnte Zapfen usw., welche Teile der Sicherheitslenksäule bilden, verlangt. Bei der geforderten Festigkeit ist jedoch das Dehnvermögen der in Frage kommenden Aluminiumwerkstoffe für den Bereich der Sollknickstellen zu gering und die erforderliche Stauch-bzw. Ausknickkraft zu hoch. Damit ist die geforderte Knickfähigkeit und damit Sicherheit im Anwendungsfalle nicht mehr gewährleistet

Aufgabe vorliegender Erfindung ist es, eine gewichtsoptimierte Lenkspindel vorzuschlagen, welche die Festigkeitsansprüche insbesondere an den Verbindungsausbildungen erfüllt und im Bereich der Sollknickstellen ein ausreichendes Dehnvermögen bei geringem Kraftniveau aufweist. Das bedeutet, dass die Lenkspindel durch die Krafteinwirkung die ihr aufgezwungene Verformung mitmacht und im wesentlichen keine Kräfte an die Teile der Sicherheitslenksäule weitergibt, welche sich der Lenkspindel anschliessen.

Erfindungsgemäss wird dies dadurch erreicht, dass die Lenkspindel ein Längsprofil aus Aluminium ist und jede Sollknickstelle eine Änderung im Querschnitt des Längsprofiles darstellt und der Bereich der Sollknickstellen oder Teilbereiche der Sollknickstellen einer Wärmebehandlung ausgesetzt wurden und die wärmebehandelten Bereiche ein höheres Dehnvermögen bei geringerer Krafteinwirkung aufweisen, als die nicht wärmebehandelten Bereiche.

Der Begriff Aluminium im Zusammnehang mit dem Längsprofil der Lenkspindel bezieht sich neben Ausführungsformen aus technischen bis reinen Aluminiumqualitäten insbesondere auch die Aluminiumlegierungen. Bevorzugte Aluminiumlegierungen sind nachfolgend aufgeführt.

Zweckmässig sind Sicherheitslenksäulen nach vorliegender Erfindung, bei denen wenigstens der Bereich der Sollknickstellen der Lenkspindel aus einem Aluminium der Reihe der thermisch härtbaren Aluminiumlegierungen oder oder der Reihe der AlMg-Legierungen besteht.

Bevorzugt sind Sicherheitslenksäulen, bei denen wenigstens der Bereich der Sollknickstellen der Lenkspindel aus einem Aluminium der Reihe der thermisch härtbaren Aluminiumlegierungen des Types AlMgSi oder AlZnMg und vorzugsweise AlZn_{4,5}Mg₁, oder einem Aluminium der Reihe der AlMg-Legierungen, vorzugsweise AlMg₃ oder AlMg_{4,5}Mn, besteht.

Nach dem erfindungsgemässen Verfahren wird die Lenkspindel als Längsprofil aus Aluminium gefertigt und in wenigstens einem Bereich Sollknickstellen angebracht und der Bereich mit Sollknickstellen oder die Teile des Bereiches mit Sollknickstellen aus Aluminium werden während einem Zeitintervall von 1 Sekunde bis 300 Sekunden erhöhten Temperaturen von 250°C bis 450°C ausgesetzt.

Bevorzugt werden der Bereich der Sollknickstellen oder Teilbereiche der Sollknickstellen während einem Zeitintervall von 5 Sekunden oder länger den erhöhten Temperaturen ausgesetzt. Bevorzugt werden der Bereich der Sollknickstellen oder Teilbereiche der Sollknickstellen während einem Zeitintervall von 60 Sekunden oder weniger, vorzugsweise während weniger als 30 Sekunden, den erhöhten Temperaturen ausgesetzt.

In anderer vorzugsweiser Ausführungsform werden der Bereich oder Teilbereiche mit Sollknickstellen während dem Zeitintervall von 1 bis 300 sec Temperaturen von 300°C bis 450°C ausgesetzt.

Die Sicherheitslenksäule und dabei die Lenkspindel, kann wenigstens einen Bereich oder auch zwei oder mehrere Bereiche mit Sollknickstellen aufweisen. In der Regel wird die Lenkspindel einer Sicherheitslenksäule einen Bereich mit Sollknickstellen aufweisen. Dieser Bereich mit Sollknickstellen kann beispielsweise eine minimale Länge von beispielsweise 0,5 cm, dies z.B. dann, wenn nur eine Knickstelle, wie eine Einbuchtung, ein Knick, eine Stauchung usw. vorgesehen ist, beispielhaft kann die minimale Länge 10 cm, vorzugsweise 15 cm, und eine maximale Länge von beispielsweise 30 cm, zweckmässig 40 cm und vorzugsweise 50 cm aufweisen. Es ist auch je nach Konstruktion möglich, dass die Lenkspindel der Sicherheitslenksäule zwei- oder mehrteilig ist, wobei die Lenkspindelteile beispielsweise durch Kreuzgelenke oder dergleichen in mehrere Teile gegliedert ist und einer, mehrere oder jeder dieser Teile einen Bereich mit Sollknickstellen aufweist. Solche Bereiche mit Sollknickstellen können dann z.B. kürzer sein und deren Länge kann im Bereich von 0,5 bis 30 cm liegen. Es ist auch möglich, dass die Lenkspindel einer einteiligen Sicherheitslenksäule über ihre Länge verteilt zwei oder mehrere Teilbereiche mit Sollknickstellen in genannten Längenabmessungen aufweist.

Sollknickstellen können dadurch erzeugt werden, dass die Lenkspindel z.B. in regelmässigen und/oder unregelmässigen Abständen Änderungen in ihrem Querschnitt aufweist. Dies können beispielsweise Einbuchtungen, Einbeulungen, Einprägungen, Abflachungen oder Stauchungen, Ausbeulungen oder Ausweitungen im Lenkspindelquerschnitt sein oder können Verminderungen oder Verdickungen im Materialquerschnitt der Lenkspindel sein. Eine Möglichkeit aus der Praxis sind Ausbuchtungen, welche beispielsweise durch Hydroformen erreicht werden und z.B. für ringförmige Ausweitungen in der Lenkspindel sorgen. Diese Ausweitungen können in einer Vielzahl und in regelmässiger oder unregelmässiger Anordnung vorliegen. Eine weitere Möglichkeit der Ausbildung von Sollknickstellen kann darin liegen, Schwächungen in der Lenkspindel anzubringen beispielsweise durch Verjüngung des Materials, das die Lenkspindel bildet oder durch Entfernung des Materials, beispielsweise durch Ausnehmungen, wie Löcher, Bohrungen, Ausstanzungen etc. Die verschiedenen Arten von Sollknickstellen können auch kombiniert werden. Zweckmässig werden die Sollknickstellen über die Länge des Bereiches der Sollknickstellen regelmässig oder unregelmässig verteilt und bezüglich der Längsachse der Lenkspindel in gleichen oder ungleichen Winkeln (von z.B. 30, 45, 60, 90, 120, 180 Grad usw.) zueinander versetzt angeordnet.

Die Lenkspindel an sich kann ganz oder teilweise aus Aluminium gefertigt werden. Auch der Bereich der Sollknickstellen, der wiederum ein Teil der Lenkspindel darstellt, kann teilweise und vorteilhaft ganz aus Aluminium gefertigt werden. Der Begriff Aluminium umfasst neben dem reinem Aluminium insbesondere auch Aluminiumlegierungen. Zweckmässig ist die ganze Lenkspindel aus Aluminium oder einer Aluminiumlegierung hergestellt. Die Lenkspindel kann an ihren Enden beispielsweise Kreuzgelenke, Muffen, Schiebemuffen, Gewinde etc. zur Befestigung weiterer Anbauteile aufweisen. Diese Teile können ebenfalls aus Aluminium oder auch aus anderen Werkstoffen, wie beispielsweise Buntmetallen, Eisenmetallen oder Stahl sein. Bevorzugt ist der Bereich der Sollknickstellen und insbesondere die ganze Lenkspindel aus einer Aluminiumlegierung beispielsweise ausgewählt aus thermisch aushärtbaren Legierungen und zweckmässig aus Legierungen der Reihe AlMgSi oder AlZnMg und vorzugsweise AlZn_{4,5}Mg₁, oder beispielsweise ausgewählt aus der Reihe der AlMg-Legierungen, vorzugsweise AlMg₃ oder Almg_{4,5}Mn, hergestellt

Die Lenkspindel ist in der Regel ein Strangpressprofil, ein Fliesspressteil oder ein Schmiedeteil bevorzugt in Rohrform, wobei der Querschnitt der Lenkspindel ursprünglich rund oder polygonal, wie auch gegebenenfalls oval sein kann. Durch das Anbringen der Sollknickstellen wird der Querschnitt im Bereich der Sollknickstellen stark verändert beispielsweise ausgeweitet, verengt von rund auf polygonal oder oval usw. umgestaltet.

Der Bereich der Sollknickstellen oder Teilbereiche der Sollknickstellen an der Lenkspindel werden nach dem Verfahren der Erfindung wärmebehandelt. D.h. im wesentlichen nur der Teil, bezogen auf die Länge der Lenkspindel, beginnend mit der ersten oder kurz vor (z.B. 0.5 bis 5 cm) der ersten Sollknickstelle und endend mit der letzten oder kurz (z.B. 0,5 bis 5 cm) nach der letzten Sollknickstelle wird wärmebehandelt In einer zweckmässigen Ausführungsform werden nur Teilbereiche der Sollknickstellen an der Lenksäule während dem angegebenen Zeitintervall den angegebenen erhöhten Temperaturen ausgesetzt. Das Verfahren nach vorliegender Erfindung kann in anderer zweckmässiger Ausführungsform auch derart ausgeführt werden, dass nur ein Teil der Sollknickstellen oder alle Sollknickstellen der Wärmebehandlung unterzogen werden, die auf einer Längshälfte der Lenkspindel liegen. Mit Längshälfte der Lenkspindel ist hier der Teil gemeint, welcher über der Ebene liegt, welche die Lenkspindel der Länge nach halbiert. Oder anders ausgedrückt, teilt man gedanklich die Lenkspindel der Länge nach in zwei Längshälften oder Halbschalen, so sollen nur ein Teil der oder alle Sollknickstellen einer Längshälfte oder Halbschale wärmebehandelt werden, während die andere Hälfte oder Halbschale unbehandelt bleibt Es ist auch möglich, die erfindungsgemässe Wärmebehandlung, bezogen auf die zu behandelnde Fläche, so zu beschränken, dass die Teilbereiche punktförmig und dabei gleichmässig oder ungleichmässig über den Bereich der Sollknickstellen verteilt sind. Mit dem Begriff punktförmig können beispielsweise Bereiche beispielsweise in der Grössenordnung von 5 - 500 cm, bevorzugt 5 - 50 cm, angesehen werden. Damit erzielt man ein gesteuertes Knickverhalten der Lenkspindel.

Die Wärmebehandlung kann durch induktive Behandlung, konvektive Behandlung oder durch Wärmestrahlung erfolgen. Eine induktive Behandlung kann darin liegen, dass die behandelten Bereiche der Wirkung einer Induktionsspule ausgesetzt werden. Die konvektive Behandlung kann darin liegen, die zu behandelnden Bereiche einer Strömung eines erhitzten Mediums, beispielsweise erhitzter Gase, wie Luft oder Brenngasen auszusetzen und die Wärmestrahlung kann durch Infrarotgasbrenner oder durch elektrisch erzeugtes Infrarot erzeugt werden. Wichtiges Merkmal des Verfahrens ist, dass die Wärmebehandlung sich auf die Sollknickstellen oder Teilbereiche der Sollknickstellen beschränkt und nicht durch Wärmeleitung sich die ganze Lenkspindel wesentlich über die Sollknickstellen hinaus erwärmt.

Durch die Wärmebehandlung wird die Dehnung und Schlagzähigkeit des Materials soweit erhöht, dass die geforderte Sicherheit im Belastungsfalle voll erreicht wird. Die anderen Eigenschaften des Materials der Lenkspindel, wie z.B. die Korrosionsbeständigkeit, das E-Modul, die Schweissbarkeit und die Lackierbarkeit werden dabei nicht beeinflusst.

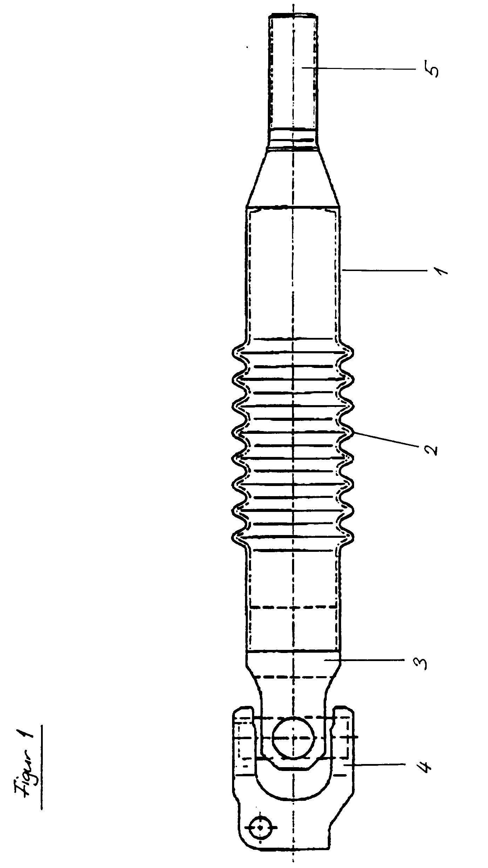

Die Figur 1 zeigt beispielhaft eine Lenkspindel 1 mit einem Bereich mit Sollknickstellen 2 und einem unteren oder vorderen Anschlussteil 3, hier beispielhaft mit einem Kreuzgelenk 4 versehen, und einem oberen oder hinteren, d.h. gegen das Lenkrad gerichteten Anschlussteil 5. Der Anschlussteil 5 kann beispielsweise als Schiebemuffe ausgeformt sein. Der Bereich der Sollknickstelle kann beispielsweise fliessgepresst werden und das Kreuzgelenk kann am vorderen Ende der Lenkspindel durch Laserschweissen trennfest angebracht werden. Die Sollknickstellen können beispielsweise durch Hydroformen, wobei ein rohrförmiger Körper durch Einpressen mit hohem Druck einer wasserhaltigen Emulsion aufgeblasen wird, erzeugt werden. Der derart erzeugte Vorformling einer Lenkspindel kann dann nach dem Verfahren der Erfindung weiter der thermischen Behandlung unterworfen werden. Zweckmässig nach dieser Behandlung erfolgt dann das Anbringen der Anbauteile, wie Kreuzgelenke, Gewinde, Schiebemuffen, Muffen, Schraubverbindungen und Klemmverbindungen, Aufschrumpfen von Anbauteilen etc.

## Patentansprüche

1. Sicherheitslenkssäule für Fahrzeuge, insbesondere Kraftfahrzeuge, mit einer bei frontaler Krafteinwirkung bleibend verformbaren Lenkspindel, wobei die Lenkspindel in ihrer Länge wenigstens einen Bereich mit Sollknickstellen aufweist,
dadurch gekennzeichnet, dass
die Lenkspindel ein Längsprofil aus Aluminium ist und jede Sollknickstelle eine Änderung im Querschnitt des Längsprofiles darstellt und der Bereich der Sollknickstellen oder Teilbereiche der Sollknickstellen einer Wärmebehandlung ausgesetzt wurden und die wärmebehandelten Bereiche ein höheres Dehnungsvermögen bei geringerer Krafteinwirkung aufweisen, als die nicht wärmebehandelten Bereiche.

2. Sicherheitslenksäule nach Anspruch 1, dadurch gekennzeichnet, dass wenigstens der Bereich der Sollknickstellen der Lenkspindel aus einem Aluminium der Reihe der thermisch härtbaren Aluminiumlegierungen oder aus einem Aluminium der Reihe der AlMg-Legierungen besteht.

3. Sicherheitslenksäule nach Anspruch 1, dadurch gekennzeichnet, dass wenigstens der Bereich der Sollknickstellen der Lenkspindel aus einem Aluminium der Reihe der thermisch härtbaren Aluminiumlegierungen des Types AlMgSi oder AlZnMg und vorzugsweise AlZn_{4,5}Mg₁, oder aus einem Aluminium der Reihe der AlMg-Legierungen, vorzugsweise AlMg₃ oder AlMg_{4,5}Mn, besteht.

4. Verfahren zur Herstellung einer Sicherheitslenksäule für Fahrzeuge, insbesondere Kraftfahrzeuge, mit einer bei frontaler Krafteinwirkung unter Energieabsorption bleibend verformbaren Lenkspindel, wobei die Lenkspindel in ihrer Länge wenigstens einen Bereich mit Sollknickstellen aufweist,
dadurch gekennzeichnet, dass
die Lenkspindel als Längsprofil aus Aluminium gefertigt und in wenigstens einem Bereich Sollknickstellen angebracht und der Bereich mit Sollknickstellen oder Teile des Bereiches mit Sollknickstellen aus Aluminium während einem Zeitintervall von 1 Sekunden bis 300 Sekunden erhöhten Temperaturen von 250°C bis 450°C ausgesetzt werden.

5. Verfahren nach Anspruch 4, dadurch gekennzeichnet, dass der Bereich oder Teilbereiche mit Sollknickstellen während einem Zeitintervall von weniger als 60 Sekunden, vorzugsweise während weniger als 30 Sekunden den erhöhten Temperaturen ausgesetzt wird.

6. Verfahren nach Anspruch 4, dadurch gekennzeichnet, dass der Bereich oder Teilbereiche mit Sollknickstellen während einem Zeitintervall von 1 bis 300 sec Temperaturen von 300°C bis 450°C ausgesetzt wird.

7. Verfahren gemäss Anspruch 4, dadurch gekennzeichnet, dass wenigstens der Bereich der Sollknickstellen aus Aluminium aus einer thermisch aushärtbaren Aluminiumlegierung, zweckmässig aus einer Legierung der Reihe AlMgSi oder AlZnMg und vorzugsweise AlZn_{4,5}Mg₁, oder aus Aluminium der Reihe der AlMg-Legierungen, vorzugsweise AlMg₃ oder AlMg_{4,5}Mn, besteht.

8. Verfahren gemäss Anspruch 4, dadurch gekennzeichnet, dass nur Teilbereiche der Sollknickstellen während dem Zeitintervall den erhöhten Temperaturen ausgesetzt werden.

9. Verfahren gemäss Anspruch 8, dadurch gekennzeichnet, dass, bezüglich des Querschnittes der Lenkspindel, die Teilbereiche der Sollknickstellen, die während dem Zeitintervall den erhöhten Temperaturen ausgesetzt werden, auf einer Längshälfte der Lenkspindel liegen.

10. Verfahren nach Anspruch 8, dadurch gekennzeichnet, dass die Teilbereiche der Sollknickstellen, die während dem Zeitintervall den erhöhten Temperaturen ausgesetzt werden, punktförmig sind.
